# EUROPEAN PATENT SPECIFICATION

(11) **EP 0 630 858 B1**
(45) Date of publication and mention of the grant of the patent: **16.12.1998**
(21) Application number: 94304229.1
(22) Date of filing: 13.06.1994
(51) Int. Cl.: C02F 1/54, C08F 251/00, C02F 1/56, C08F 289/00

(54) **Composition and method for water clarification and wastewater treatment**
Zusammensetzung und Verfahren zur Wasserreinigung und Behandlung von Abwässern
Composition et méthode de clarification d'eau et de traitement d'eau usée

(30) Priority: 22.06.1993 US 80909; 20.05.1994 US 246544; 20.05.1994 US 246547
(43) Date of publication of application: 28.12.1994
(73) Proprietor: BetzDearborn Europe, Inc., Trevose PA 19053-6783 (US)
(72) Inventor: Chen, Jen-Chi, Morrisville, PA 19067 (US); Walterick, Gerald Cecil, Levittown, PA 19055 (US); Chen, Fu, Newtown, PA 18940 (US); Vasconcellos, Stephen Robert, Doylestown, PA 18901 (US)
(74) Representative: W.P. Thompson & Co.

(56) References cited:
- EP-A- 0 319 016
- EP-A- 0 526 800
- WO-A-92/07035
- DE-A- 4 219 343
- US-A- 5 134 215

## Description

The present invention relates to compositions of tannin containing polymers and methods of using the same for water clarification.

Raw water such as water from rivers, lakes or underground usually contains suspended matter. The suspended matter must be removed by clarification in order to provide water suitable for use in domestic and industrial applications. The suspended matter can consist of large solids, settleable by gravity alone without any external aid, and nonsettleable material, often colloidal in nature. Removal of the suspended material is generally accomplished by coagulation, flocculation, and sedimentation. in combination, these processes are referred to as conventional clarification. (see Betz Handbook of Industrial Water Conditioning, 9th Edition, 1991, Betz Laboratories, Inc., Trevose, PA, pages 23 through 30).

Naturally occurring suspended particles are predominantly negatively charged. Water-soluble organic cationic polymers, such as polyamine and polydiallyldimethyl ammonium chloride, are normally used to clarify water having high turbidity (greater than 60 NTU, nephelometric turbidity units). In low turbidity water (less than 60 NTU), there are generally not enough particulates to form a settleable floc when the water is treated with cationic polymer alone. Inorganic coagulants such as aluminum sulfate, polyaluminum chloride, ferric sulfate, ferric chloride and sodium aluminate are used instead. These inorganic coagulants are relatively inexpensive and generally effective for water clarification. However, they tend to generate voluminous sludge which is difficult to dewater. Also, such inorganic coagulants are only effective within a particular pH range and therefore require proper pH adjustment of the water during treatment. In addition, residual iron and aluminum ions in the water treated may affect downstream operations such as cooling and boiler treatments and may also cause health and environmental concerns when the water is finally discharged.

Water soluble/dispersible melamine formaldehyde resins have been used for clarification of low turbidity waters, but the residual formaldehyde in the resin can give rise to handling and disposal difficulties. It is the object of the present invention to provide an effective method of clarifying water without incurring the disadvantages of inorganic coagulants and melamine formaldehyde resins.

The present invention provides for a composition, the method of preparing the same and a method of using the composition for water clarification. The composition comprises a water soluble/dispersible tannin containing polymer obtained by polymerizing ethylenically unsaturated monomers with tannin.

U.S. Patents 4,558,080; 4,734,216 and 4,781,839 disclose a tannin based polymer obtained by reacting tannin with an amino compound and an aldehyde under acidic conditions for use as a flocculant. The manufacturing process requires careful monitoring of the pH and intermediate viscosity during the reaction to prevent the batch from gelling. The long term stability of the product and the amount of residual amine and formaldehyde in the solution may cause handling concerns.

U.S. 4,990,270 discloses a thickening agent prepared by graft copolymerizing acrylamide and cationic monomer with water insoluble lignin in a calcium chloride/dimethylsulfoxide solution. The procedure is quite complicated and requires precipitation in acetone and filtration, and dialysis to isolate the product. The resulting material is used for enhanced oil recovery.

DE-A- 42 19 343 discloses cationic tannin acids produced from outer bark extracts. The bark extract containing tannin is cross-linked e.g. with formaldehyde prior to cationisation with glycidyl trimethylammonium chloride, an N-(3-chloro-2-hydroxypropyl)-trimethyl ammonium chloride reagent or a dimethyl amine reagent.

### DETAILED DESCRIPTION OF THE INVENTION

This invention provides for a composition comprising a tannin containing polymeric material. The invention also provides for methods for preparing the tannin containing polymers and methods of using the polymers for various water treatments.

Tannin, also called tannic acid, occurs in the leaf, branch, bark and fruit of many plants. As disclosed by A. Pizzi in "Condensed Tannin for Adhesives", Ind. Eng. Chem. Prod. Res. Dev. 1982, 21, pages 359-369, the natural tannins can be as "hydrolyzable" tannin and "condensed" tannin. The composition and structure of tannin will vary with the source and the method of extraction, but the empirical structure is given as C₇₆H₅₂O₄₆ with many OH groups attached to the aromatic rings. The tannin used in the present invention is a condensed tannin type including but not limited to those derived from Quebracho, Mimosa and Sumac. However, hydrolyzable tannins are also contemplated to be within the scope of this invention.

According to the present invention there is provided a water soluble or water dispersible polymer having the formula:

Tannin - [N-C-A]

wherein N is a nonionic monomer, C is a cationic monomer selected from methyl chloride or dimethyl sulfate quaternary salt of dimethylaminoethyl acrylate, diethylaminoethyl acrylate, dimethylaminoethyl methacrylate, diethylaminoethyl methacrylate, dimethylaminopropyl methacrylamide, dimethylaminopropyl acrylamide, and diallyl dimethyl ammonium chloride, and A is an anionic monomer, and the mole percentage of N is from 0 to 60%, the mole percentage of C is from 30 to 100% and the mole percentage of A is from 0 to 30% provided the total mole percentage in the polymer is 100%.

The present invention also provides a process for the production of a water soluble or dispersible tannin containing polymer which comprises mixing a sufficient amount of a tannin and a cationic monomer in an aqueous phase to form an aqueous solution, polymerizing said monomers at a temperature of about 20° to 100°C and a pH of about 2.0 to 8.0 in the presence of an initiator, said cationic monomer being selected from methyl chloride or dimethyl sulfate quaternary salt of dimethylaminoethyl acrylate, diethylaminoethyl acrylate, dimethylaminoethyl methacrylate, diethylaminoethyl methacrylate, dimethylaminopropyl methacrylamide, dimethylaminopropyl acrylamide, and diallyl dimethyl ammonium chloride.

Optionally in the process of the invention this polymer further contains an anionic monomer and/or nonionic monomer.

The most preferred cationic monomer is methyl chloride quaternary salt of diethylaminoethyl acrylate.

The anionic monomer is preferably selected from the group containing ethylenically unsaturated carboxylic acid or sulfonic acid functional groups. These monomers include but are not limited to acrylic acid, methacrylic acid, vinyl acetic acid, itaconic acid, maleic acid, allylacetic acid, styrene sulfonic acid, 2-acrylamido-2-methyl propane sulfonic acid (AMPS®) and 3-allyloxy-2-hydroxypropane sulfonic acids and salts thereof. The preferred anionic monomer is acrylic acid.

The nonionic monomer is preferably selected from the group of ethylenically unsaturated nonionic monomers which comprise but are not limited to acrylamide, methacrylamide, N-methylolacrylamide, N,N-dimethyl-acrylamide; lower alkyl (C₁-C₆) esters including vinyl acetate, methyl acrylate, ethyl acrylate, and methyl methacrylate; hydroxylated lower alkyl (C₁-C₆) esters including hydroxyethyl acrylate, hydroxypropyl acrylate and hydroxyethyl methacrylate; allyl glycidyl ether; and ethoxylated allyl ethers of polyethylene glycol, polypropylene glycol and propoxylated acrylates. The preferred nonionic monomers are allyl glycidyl ether and acrylamide.

The resulting tannin containing polymer contains from 10 to 80% by weight of tannin, 20 to 90% by weight of cationic monomer, 0 to 30% by weight of nonionic monomer and 0 to 20% by weight of anionic monomer, provided that the resulting tannin containing polymer is still water soluble or dispersible and the total weight % of cationic, nonionic and anionic monomers and tannin adds up to 100%. Preferably, when the cationic monomer and anionic monomer are present together in the tannin containing polymer, the cationic monomer comprises a greater weight percentage than the anionic monomer. In preferred embodiments with only the cationic monomer present, the tannin-cationic monomer copolymer contains 50/50 weight percent and a 30/70 weight percent of tannin and cationic monomer.

The number average molecular weight of the resulting tannin containing polymer is not critical, as it is still water soluble or dispersible. The tannin containing polymers may be prepared by mixing the desired monomers with tannin and initiating by a free radical initiator via solution, precipitation or emulsion polymerization techniques. Conventional initiators such as azo compounds, persulfates, peroxides and redox couples may be used. The preferred initiators are 2,2'azobis(2-amidino-propane) dihydrochloride, available as V-50 from Wako Chemicals and t-butylhydroperoxide/sodium metabisulfite (t-BHP/NaMBS). These or other initiators may be added at the end of polymerization to further react with any residual monomers.

Chain transfer agents such as alcohol, amine, formic acid or mercapto compounds may be used to regulate the molecular weight of the polymer. The resulting polymer may be isolated by well known techniques including precipitation, etc., or the polymer may simply be used in its aqueous solution.

The reaction temperature is not critical and generally occurs between 20° and 100°C, preferably 40° to 70°C. The pH of the reaction mixture is also not critical and is generally in the range of 2.0 to 8.0. The resulting tannin containing polymers are characterized by C-13 NMR, Brookfield viscosity and percent solids.

The resulting tannin containing polymers should be added to the aqueous system to be treated in an amount sufficient for its intended purpose. For the most part, this amount will vary depending upon the particular aqueous system for which treatment is desired and can be influenced by such variables as turbidity, pH, temperature, water quantity and type of contaminants present in the system. The tannin containing polymers are effective at a wide range of pHs and should prove effective at the pH of any aqueous system for which water treatment is sought.

The tannin containing polymers of the present invention prove useful in a variety of aqueous systems suffering from different contaminants but are well suited to the reduction of turbidity, color and the clarification of aqueous systems such as influent waters and waste water systems. Clay, silt, finely divided organic and inorganic matter, and microscopic organisms can all contribute to turbidity. Color is most often colloidal in nature and results from organic materials such as humic acids and other compounds leached from vegetative matter.

Wastewater systems that are envisioned to be within the scope of the present invention include primary and oily wastewater streams from industries including but not limited to the refinery, petrochemical, chemical, steel, rolling mill, automobile, textile and meat and food processing industries. The contaminants in these systems are organic and inorganic contaminants which include but are not limited to settleable and unsettleable solids, oil, grease, precipitated metals, and fatty and proteinaceous substances.

The tannin containing polymers can be added to the aqueous system where water clarification is sought in amounts ranging from about 0.1 parts to about 100 parts per million parts water. The polymers may be added to the aqueous system neat or in an aqueous solution either continuously or intermittently.

Polymeric flocculants such as polyacrylamide and copolymers of acrylamide with acrylic acid and other coagulants such as alum, ferric chloride, clays, zeolites, activated carbon and the like may be used in conjunction with the tannin containing polymers to reduce turbidity and color and improve clarity.

Those skilled in the art will recognize the many applications in which these tannin containing polymers will find utility. These utilities include, but are not limited to, wastewater treatment applications such as wastewater from chemical plants, refineries and pulp and paper mills, influent water clarification, color reduction, secondary water clarification, oily waste water treatment, proteinaceous containing waste water, paper-making (e.g., retention and drainage aids), protein recovery, emulsion breaking, sludge dewatering, upflow filter clarification, horizontal flow clarification, and the like.

In order to more clearly illustrate this invention, the data set forth below were developed. The following examples are included as illustrations of the invention and should not be construed as limiting the scope thereof.

### Examples

### Experimental procedures for the preparation of tannin containing polymers

### Example 1

A reaction flask equipped with a condenser, a thermometer, a nitrogen inlet and a mechanical stirrer was charged with 51.0 g of condensed tannin (Quebracho type) and 204.0 g of deionized water. 3.5 g of 50% caustic and 3.76 g of allylglycidyl ether (AGE) were then added to the tannin solution. This solution was heated to 50°C and maintained for 7 hours. FT-IR showed that there were no adsorption bands corresponding to the residual epoxy group of AGE.

### Example 2

The resulting tannin/AGE solution of Example 1 was adjusted to pH 6.8 by sulfuric acid. An initiator solution containing 0.39 g of 2,2' azo bis (2-amidino propane) dihydrochloride (V-50) in 2.4 g of deionized water was then added to 124 g of the solution at 60°C. A monomer solution containing 57.2 g of dimethylaminoethyl acrylate methyl chloride quat (AETAC, 80%) and 1.1 g of acrylic acid (AA) was then gradually added to the flask in 5 hours.

Additional initiator solution was added before the completion of the monomer addition. After that, the polymerization was allowed to proceed overnight. More initiator was added to complete the reaction. The structure of the resulting polymer was verified by C-13 NMR. The resulting tannin containing polymer solution had a Brookfield viscosity of 1070 cps at 27.3% solids (25C).

### Example 3

Utilizing the apparatus and procedure as described in Example 2, 60.5 g of 80% AETAC and 1.2 g of AA were used for polymerization with 79 g of the tannin/AGE solution. The resulting tannin containing polymer solution had a Brookfield viscosity of 243 cps at 24.5% solids (25C).

### Example 4

Utilizing the apparatus, procedure and reagent charge as described in Example 3, 32.50 g of the AGE/tannin solution was used for the polymerization with AETAC and AA. The resulting solution had a Brookfield viscosity of 81 cps at 21.8% solids (25C)

### Example 5

The apparatus and procedure similar to that described in Example 3 were used, except this time, AA was not used for the reaction. The solution pH was adjusted to 6.5 by sulfuric acid before polymerization. 60.5 g of 80% AETAC and 79 g of the tannin/AGE solution were used for polymerization. The resulting polymer solution had a Brookfield viscosity of 1050 cps at 26.9% solids (25C).

### Example 6 & 7

A procedure as described in Example 5 was used to prepare a different weight ratio of tannin/AETAC polymers. The composition and physical properties of the resulting polymer solutions are shown in Tables I and II.

### Example 8

60.5 g of AETAC (80%) and 1.2 g of AA were gradually charged into 127.5 g of tannin solution (20% solids) at 60°C in 4.5 hours. V-50 was shot fed into the reactor vessel to initiate the polymerization process

The structure of the resulting tannin containing polymer solution was verified by C-13 NMR. The resulting polymer solution had a Brook-field viscosity of 583 cps at 35.5% solids (25C).

### Example 9

A similar process as described in Example 8 was used to prepare a tannin/AETAC/AA polymer solution. The resulting polymer solution had a Brookfield viscosity of 754 cps at 35.6% solids (25C).

### Example 10

A similar process as described in Example 8 was used to prepare a tannin/AETAC solution. 64.5 g of AETAC (80%) was reacted with 127.5 g of tannin solution (20% solids) using V-50 as the initiator. The resulting polymer solution had a Brookfield viscosity of 625 cps at 35.2% solids (25C).

### Example 11

Utilizing a procedure similar to that described in Example 10, 47.8 g of 80% AETAC was reacted with 127.5 g of tannin solution (20% solids) using V-50 as the initiator. The structure of the resulting polymer was verified by C-13 NMR. The polymer solution had a Brookfield viscosity of 323 cps at 33.3% solids (25C).

### Example 12

Utilizing an apparatus and procedure similar to that described in Example 11, Mimosa type of tannin was used in the reaction. The resulting solution had a Brookfield viscosity of 109 cps at 36.3% solids (25C).

### Examples 13 and 14

Utilizing a similar apparatus and procedure as described in Example 11, Mimosa type of tannin from a different source was used in the reaction.

### Example 15

In this example, a redox pair of t-butylhydroperoxide (t-BHP) /sodium metabisulfite (NaMBS) was used as the initiator. 22.1 g of tannin (Mimosa type), 64.5 g of 80% AETAC were charged to a reaction vessel containing 42.7 g of DI water at 55C. 20 g of 4% t-BHP and 20 g of 6% NaMBS were then gradually charged to the solution in 5.5 hours at 50-55°C. The solution was held at 50°C for 30 minutes before cooling down. After final dilution, the resulting polymer solution had a Brookfield viscosity of 173 cps at 31.2% solids (25C).

### Example 16

Utilizing a similar procedure as described in Example 15, Quebracho tannin was used in the reaction. The resulting solution had a Brookfield viscosity of 133 cps at 32.5% solids (25C).

### Examples 17, 18, 19 and 20

A similar procedure as described in Example 15 was used to prepare a different weight ratio of tannin/AETAC polymer.

### Example 21

Utilizing a procedure similar to that described in Example 15 however, 31.0 g of 80% AETAC and 7.7 g of 52% acrylamide (AM) were used to copolymerize with 38.7 g of tannin. The resulting solution had a Brookfield viscosity of 459 cps at 31.2% solids (25C).

### Example 22

Utilizing a procedure similar to Example 15, 1439 parts of AETAC (80%) was reacted with 1151 parts of tannin (Mimosa type) in an aqueous solution at 45°C. 68 parts of t-BHP and 189 parts of sodium metabisulfite (20%) was used as the initiator. The resulting solution had a Brookfield viscosity of 1150 cps at 37.2% solids (25C).

### Example 23

Utilizing a procedure similar to Example 22, 4400 parts of AETAC (80%) was reacted with 3520 parts of tannin (Mimosa type) in an aqueous solution. The resulting solution had a Brookfield viscosity of 409 cps at 38.2% solids (25C).

### Comparative Example

A tannin/monoethanolamine/formaldehyde material was prepared in substantial conformity to the procedure of Example 1 in U.S. 4,558,080. The resulting product had a viscosity of 200 cps (40.5% solids) at pH of 2.4.

Tables I and II summarize the composition and physical properties of the resulting tannin containing polymers.

**TABLE I**

| Composition of tannin containing polymers Examples 1-11 and 15-21 are Quebracho tannin Examples 12-14 and 22-23 are Mimosa tannin | | |
|---|---|---|
| Example No. | Composition | Weight % |
| 2 | tannin/(AETAC/AA/AGE) | 33.1/(62.9/1.6/2.4) |
| 3 | tannin/(AETAC/AA/AGE) | 23.2/(73.3/1.8/1.7) |
| 4 | tannin/(AETAC/AA/AGE) | 11.1/(86.0/2.1/0.8) |
| 5 | tannin/(AETAC/AGE) | 32.2/(65.4/2.4) |
| 6 | tannin/(AETAC/AGE) | 22.5/(75.8/1.7) |
| 7 | tannin/(AETAC/AGE) | 10.8/(88.4/0.8) |
| 8 | tannin/(AETAC/AGE) | 34/(64.4/1.6) |
| 9 | tannin/(AETAC/AA) | 34/(64.4/1.6) |
| 10 | tannin/AETAC | 33.1/66.9 |
| 11 | tannin/AETAC | 40/60 |
| 12 | tannin/AETAC | 33.1/66.9 |
| 13 | tannin/AETAC | 33.1/66.9 |
| 14 | tannin/AETAC | 33.1/66.9 |
| 15 | tannin/AETAC | 30/70 |
| 16 | tannin/AETAC | 30/70 |
| 17 | tannin/AETAC | 40/60 |
| 18 | tannin/AETAC | 50/50 |
| 19 | tannin/AETAC | 50/50 |
| 20 | tannin/AETAC | 55/45 |
| 21 | tannin/(AETAC/AM) | 50/(40/10) |
| 22 | tannin/AETAC | 50/50 |
| 23 | tannin/AETAC | 50/50 |
| AETAC is dimethylaminoethyl acrylate methyl chloride QUAT AA is acrylic acid AGE is allyl glycidyl ether AM is acrylamide | | |

**TABLE II**

| Physical properties of tannin-containing polymers | | | | |
|---|---|---|---|---|
| Examples | Composition | Solids % | pH | Brookfield Viscosity (cps) |
| 2 | tannin/(AETAC/AA/AGE) | 27.3 | 4.0 | 1070 |
| 3 | tannin/(AETAC/AA/AGE) | 24.5 | 3.5 | 243 |
| 4 | tannin/(AETAC/AA/AGE) | 21.8 | 3.1 | 81 |
| 5 | tannin/(AETAC/AGE) | 26.9 | 4.6 | 1050 |
| 6 | tannin/(AETAC/AGE) | 24.4 | 4.4 | 151 |
| 7 | tannin/(AETAC/AGE) | 21.8 | 4.0 | 89 |
| 8 | tannin/(AETAC/AGE) | 35.5 | 3.4 | 583 |
| 9 | tannin/(AETAC/AA) | 35.6 | 3.2 | 754 |
| 10 | tannin/AETAC | 35.2 | 4.0 | 625 |
| 11 | tannin/AETAC | 33.3 | 4.0 | 323 |
| 12 | tannin/AETAC | 36.3 | 3.6 | 109 |
| 13 | tannin/AETAC | 36.4 | 3.6 | 204 |
| 14 | tannin/AETAC | 36.3 | 3.5 | 238 |
| 15 | tannin/AETAC | 31.2 | 1.8 | 173 |
| 16 | tannin/AETAC | 32.5 | 2.2 | 133 |
| 17 | tannin/AETAC | 33.2 | 2.3 | 148 |
| 18 | tannin/AETAC | 31.8 | 2.4 | 118 |
| 19 | tannin/AETAC | 33.5 | 2.8 | 180 |
| 20 | tannin/AETAC | 32.1 | 2.2 | 189 |
| 21 | tannin/(AETAC/AM) | 31.2 | 2.4 | 459 |
| 22 | tannin/AETAC | 37.2 | 2.2 | 1150 |
| 23 | tannin/AETAC | 38.2 | 2.5 | 407 |

| Comparative: | | | | |
|---|---|---|---|---|
| | tannin/amine/formaldehyde | 40.5 | 2.4 | 200 |
| AETAC = methyl chloride quaternary salt of dimethylaminoethyl acrylate AA = acrylic acid AGE = allyl glycidyl ether AM = acrylamide Comparative = polymer of U.S. Pat. No. 4,558,080, Example 1 | | | | |

### Efficacy Tests

In order to demonstrate the efficacy of the tannin containing polymers of the invention for reducing turbidity and color, water clarification tests were conducted using the synthetic river water and water samples from various U.S. rivers as test substrates.

The synthetic river water substrate contained distilled water, reagent grade chemicals (CaCO₃ and MgCO₃) and naturally occurring clays and humic acid. It was prepared to have the following composition, which closely approximates the composition of a typical low-medium turbidity river water:
turbidity = 8-10 NTU
total suspended solids = 30 mg/l
true color = 25 Pt-Co color units
pH = 7.0
Ca = 40 ppm as CaCO3
Mg = 20 ppm as CaCO3

### Test Procedure

The procedure used was a standard jar test designed to simulate the operation of a typical water treatment clarifier. For single component treatments, the test procedure consisted of: adding the polymer treatment to the test substrate at various dosages, mixing the treated substrate and allowing the solids formed in the water to settle, and finally measuring the residual turbidity and color of the supernatant water produced by each treatment.

Analytical procedures used to evaluate product efficacies included turbidity measurement and true color measurement. Turbidities of untreated and treated water samples were determined using a Hach Model 18900 ratio turbidimeter. True color concentrations were determined by measuring the absorbance at 455 nanometers of samples that had been filtered through a 0.45 micron filter. Absorbances were measured using a Hach DR 2000 spectrophotometer calibrated to convert absorbance values to standard platinum-cobalt color units (Pt-Co cu).

For dual component treatments, the test procedure consisted of: adding the tannin containing polymer treatment to the test substrate, mixing 2 minutes, adding an anionic flocculant to the treated substrate, mixing 20 minutes, settling 15 minutes, and measuring the supernatant turbidity.

Tables III and IV show the lowest measured turbidity value for each polymer at the polymer dosage that achieved this turbidity.

Tables V and VI show the residual true color and residual turbidity results for the tannin containing polymers.

Commercial materials such as alum (aluminum sulfate), water soluble resins of melamine formaldehyde and tannin/amine/formaldehyde were also tested for comparison.

**TABLE III**

| Turbidity testing for tannin containing polymers Lowest turbidity (NTU) at ppm active dosage Synthetic | | | | | | |
|---|---|---|---|---|---|---|
| Treatment | Water (8-10 NTU) | | Delaware River Water (4-7 NTU) | | Delaware River Water* | |
| | ppm | NTU | ppm | NTU | ppm | NTU |
| Example 2 | 1.0 | 0.9 | 2.0 | 2.3 | 2.0 | 1.5 |
| Example 3 | 1.0 | 1.5 | 0.5 | 2.7 | | |
| Example 4 | 0.5 | 2.1 | 0.5 | 2.8 | | |
| Example 5 | 1.0 | 0.5 | 0.5 | 2.5 | | |
| Example 6 | 1.5 | 1.2 | 0.5 | 2.6 | | |
| Example 7 | 0.5 | 2.5 | 0.5 | 2.6 | | |
| Example 8 | 1.0 | 0.8 | 2.0 | 1.8 | 2.0 | 1.5 |
| Example 9 | 0.75 | 0.7 | | | | |
| Example 10 | 0.75 | 0.7 | | | | |
| Example 11 | 1.5 | 0.3 | 2.0 | 2.8 | 2.0 | 1.6 |
| Example 12 | 1.5 | 0.6 | 2.0 | 2.0 | 2.0 | 1.2 |
| Example 13 | 1.5 | 0.6 | 2.0 | 1.5 | 2.0 | 1.1 |
| Example 14 | 1.0 | 0.8 | 2.0 | 1.6 | 2.0 | 1.0 |
| MF | 6.6 | 0.7 | 6.0 | 0.5 | | |
| Alum | 15.0 | 0.2 | 10.0 | 0.9 | | |
| Tannin/AM/F | 7.0 | 0.2 | 4.0 | 0.7 | | |
| Comparative | | | 6.0 | 0.7 | | |

| | | | | | | |
|---|---|---|---|---|---|---|
| *with 0.1 ppm of anionic (acrylamide/acrylic acid) (90/10) copolymer. | | | | | | |
| MF is a commercially available melamine/formaldehyde resin tannin/AM/F is a commercially available tannin/amine/formaldehyde polymer Comparative is Example 1 of U.S. Pat. No. 4,558,080. | | | | | | |

**TABLE IV**

| Turbidity testing for tannin containing polymers Lowest turbidity (NTU) at ppm active dosage 7.2 NTU untreated river water turbidity | | | | | |
|---|---|---|---|---|---|
| Treatment | Delaware River Water | | Delaware River Water | | |
| | ppm | NTU | ppm | NTU | ppm/AM/AA* |
| Example 15 | 4.0 | 2.7 | 4.0 | 1.5 | 0.25 |
| Example 16 | 4.0 | 4.1 | 4.0 | 2.2 | 0.25 |
| Example 17 | 4.0 | 2.4 | 3.0 | 0.9 | 0.25 |
| Example 18 | 4.0 | 1.6 | 3.0 | 1.0 | 0.10 |
| Example 19 | 4.0 | 1.8 | 3.0 | 1.1 | 0.25 |
| Example 20 | 4.0 | 1.3 | 3.0 | 1.0 | 0.10 |
| Example 21 | 4.0 | 2.3 | 3.0 | 1.0 | 0.10 |
| MF | 8.0 | 0.8 | | | |
| Alum | 12.5 | 0.3 | | | |
| Tannin/AM/F | 6.0 | 0.8 | | | |

| | | | | | |
|---|---|---|---|---|---|
| *ppm of 90/10 acrylamide/acrylic acid copolymer | | | | | |
| MF is commercially available melamine/formaldehyde resin Tannin/AM/F is a commercially available tannin/amine/formaldehyde polymer | | | | | |

**TABLE V**

| Turbidity and color reduction testing Wisconsin River water substrate | | | |
|---|---|---|---|
| Example | Polymer Dosage (mg actives/liter) | Supernatant Water Quality | |
| | | Residual Turbidity (ntu) | Residual True Color (Pt-Co cu) |
| no treatment | 0 | 10.6 | 69 |
| Example 14 | 4 | 10.7 | 42 |
| Example 14 | 8 | 4.4 | 27 |
| Example 14 | 12 | 2.5 | 19 |
| Example 14 | 16 | 1.7 | 14 |
| Example 14 | 20 | 3.7 | 10 |
| Example 17 | 4 | 11.6 | 45 |
| Example 17 | 8 | 4.2 | 26 |
| Example 17 | 12 | 2.8 | 19 |
| Example 17 | 16 | 2.5 | 15 |
| Example 17 | 20 | 3.0 | 12 |
| Example 18 | 4 | 11.4 | 60 |
| Example 18 | 8 | 8.2 | 33 |
| Example 18 | 12 | 3.4 | 26 |
| Example 18 | 16 | 3.4 | 22 |
| Example 18 | 20 | 2.7 | 19 |
| Example 20 | 4 | 10.8 | 61 |
| Example 20 | 8 | 11.0 | 40 |
| Example 20 | 12 | 3.6 | 30 |
| Example 20 | 16 | 2.9 | 29 |
| Example 20 | 20 | 2.6 | 26 |
| Example 21 | 4 | 11.2 | 56 |
| Example 21 | 8 | 7.1 | 39 |
| Example 21 | 12 | 2.8 | 33 |
| Example 21 | 16 | 2.7 | 30 |
| Example 21 | 20 | 3.1 | 29 |
| tannin/AM/F | 12 | 9.4 | 47 |
| tannin/AM/F | 14 | 6.1 | 40 |
| tannin/AM/F | 16 | 2.7 | 35 |
| tannin/AM/F | 20 | 1.41 | 26 |
| tannin/AM/F | 24 | 1.08 | 22 |
| tannin/AM/F is a commercially available tannin/amine/formaldehyde polymer | | | |

**TABLE VI**

| Color reduction testing Hudson River water substrate | | | |
|---|---|---|---|
| Example | Polymer Dosage (mg actives/liter) | Supernatant Water Quality | |
| | | Residual Turbidity (ntu) | Residual True Color (Pt-Co cu) |
| no treatment | 0 | 16.7 | 22 |
| Example 22 | 3 | 9.4 | 13 |
| Example 22 | 6 | 3.1 | 12 |
| Example 22 | 9 | 1.55 | 11 |
| Example 22 | 12 | 0.98 | 8 |
| Example 22 | 15 | 1.13 | 7 |
| Example 23 | 3 | 10.8 | 15 |
| Example 23 | 6 | 3.2 | 10 |
| Example 23 | 9 | 1.52 | 10 |
| Example 23 | 12 | 1.50 | 10 |
| Example 23 | 15 | 0.98 | 10 |

The results in Tables III and IV demonstrate that the polymers of the invention reduced the turbidity in the test substrates at low dosage.

The results in Tables V and VI show that the tannin containing polymers of the present invention also prove effective at reducing color in influent water.

To demonstrate the efficacy of tannin-based polymers for clarification of wastewaters, tests were conducted in the laboratory on several wastewater samples from different industries. Descriptions of the test substrates, test procedures and test results are given in the examples below.

Jar tests were conducted using a sample of oily wastewater from a Texas refinery as a test substrate. The clarity of the wastewater was determined by measuring the turbidity. Untreated the water had a turbidity of 32 ntu. Samples of untreated oily wastewater were placed in 400 ml beakers then treated with varying dosages of each coagulant. Coagulants evaluated included aluminum sulfate (as a Control treatment representing traditional technology) and solutions of the tannin-based polymers.

The following procedure was used for mixing each treated sample of oily wastewater:
1) 200 ml/test; sample mixed in 400 ml beakers using 1" x 2" paddles;
2) Coagulant added while mixing @ 100 rpm;
3) Mixed 5 min. @ 100 rpm; (pH adjusted to 6.5 to 8.0 with 1N NaOH)
4) Polymer 1115L (AA/AM copolymer)added, mixed 30 sec. @ 100 rpm;
5) mixed 5 min. @ 35 rpm;
6) mixing stopped, quiescent conditions maintained for 5 min. to allow separation of oil;
7) clarified water sampled and analyzed for residual turbidity using Hach Model 18900 Ratio Turbidimeter.

Results of these tests are shown in Table VII below.

**TABLE VII**

| Oily Wastewater Clarification Southwest Oil Refinery | | | | | |
|---|---|---|---|---|---|
| Test # | Al2(SO4)3-14H2O (mg/liter) | Example No. | Dosage (mg active polymer/liter) | Polymer 1115L (mg/liter) | Residual Turbidity (ntu) |
| 1 | 0 | --- | ---- | 1.5 | 33 |
| 2 | 50 | --- | ---- | 1.5 | 4.7 |
| 3 | 75 | --- | ---- | 1.5 | 2.8 |
| 4 | 100 | --- | ---- | 1.5 | 2.9 |
| 5 | 125 | --- | ---- | 1.5 | 1.8 |
| 6 | 150 | --- | ---- | 1.5 | 2.3 |
| 7 | 0 | 20 | 10 | 1.5 | 6.2 |
| 8 | 0 | 20 | 15 | 1.5 | 4.4 |
| 9 | 0 | 20 | 20 | 1.5 | 7.8 |
| 10 | 0 | 20 | 25 | 1.5 | 5.5 |
| 11 | 0 | 21 | 10 | 1.5 | 5.2 |
| 12 | 0 | 21 | 15 | 1.5 | 5.3 |
| 13 | 0 | 21 | 20 | 1.5 | 6.1 |
| 14 | 0 | 21 | 25 | 1.5 | 2.2 |
| 15 | 0 | 18 | 10 | 1.5 | 6.7 |
| 16 | 0 | 18 | 15 | 1.5 | 10.4 |
| 17 | 0 | 18 | 20 | 1.5 | 6.3 |
| 18 | 0 | 18 | 25 | 1.5 | 8.7 |

As can be seen from the turbidity data, all three of the experimental polymers were capable of achieving significant improvements in the clarity of the oily wastewater. Of particular note was the polymer of Example 21, which reduced turbidity to 2.2 ntu at a dosage of 25 mg/l (Test # 14). This treatment was comparable to the aluminum sulfate treatment at 125 mg/l which reduced residual turbidity to 1.8 ntu (Test # 5). A comparison of the theoretical amounts of sludge solids that would be generated by these treatments indicates that 125 mg/l of aluminum sulfate would generate 65 mg/l of solids due to aluminum hydroxide precipitation while 25 mg/l of Example 21 would generate approximately 25 mg/l of solids. This represents a 62 % reduction in waste sludge, a significant reduction that would result in substantial savings in sludge disposal costs for the waste treatment plant.

Jar tests were conducted using a sample of oily wastewater from an aluminum processing plant. The clarity of the water was determined by measuring the turbidity and oil content. Untreated, the wastewater turbidity was 71.6 ntu and the freon-extractable oil content was 252 ppm.

Samples of oily wastewater were placed in 400 ml beakers and treated with varying dosages of aluminum sulfate and Example 23. The following procedure, designed to simulate the mixing conditions in the full-scale waste treatment system, was used for the jar test evaluations.
1) 200 ml/test, sample mixed in 400 ml beaker using 1" x 2" paddles;
2) coagulant added while mixing @ 125 rpm; mixed 36 min. @ 125 rpm; (pH adjusted to 7.0 to 7.5 with NaOH)
3) 4 mg/l Polymer 1125L (AA/AM copolymer) added as coagulant aid; mixed 30 sec. @ 125 rpm; mixed 24 sec. @ 74 rpm;
4) mixing stopped, quiescent conditions maintained for 5 min. to allow separation of oil;
5) supernatant sampled for residual turbidity and oil analyses;
6) turbidity measured using Hach Model 18900 Ratio Turbidimeter.
7) freon extractable oil measured using Horiba OCMA 200F Oil Content Analyzer.

Results of these tests are shown in Table VIII below.

**TABLE VIII**

| Oily Wastewater Clarification Aluminum Manufacturing Plant Supernatant Water Quality | | | | | |
|---|---|---|---|---|---|
| Test # | Al2(SO4)3-14H2O (mg/liter) | Example 23 (mg/liter) | Polymer 1125L (mg/liter) | Residual Turbidity (ntu) | Residual Oil (ppm) |
| 1 | 0 | 0 | 4 | 75.5 | 60 |
| 2 | 50 | 0 | 4 | 39.2 | 140 |
| 3 | 100 | 0 | 4 | 21.4 | 42 |
| 4 | 150 | 0 | 4 | 10.7 | 24 |
| 5 | 200 | 0 | 4 | 11.6 | 37 |
| 6 | 250 | 0 | 4 | 10.2 | 50 |
| 7 | 0 | 100 | 4 | 38.3 | 36 |
| 8 | 0 | 200 | 4 | 15.2 | 44 |
| 9 | 0 | 300 | 4 | 12.8 | 30 |

As can be seen from the turbidity and residual oil data, the tannin/AETAC copolymer of Example 23 treatments resulted in significant improvements in the clarity of this wastewater.

A sample of mixed liquor from a corn processing plant was used to evaluate the dewaterability of Example 23. Capillary Suction Times (CST) were used to assess performance. Untreated, the sludge contained 0.6% solids with a pH of 6.5. Varying polymer dosages were added to a 200 ml sample of sludge, the treated sludge was mixed for 30 seconds at 500 rpm, and then 7 ml aliquots were removed for CST analysis.

Results of these tests are shown in Table IX below.

**TABLE IX**

| Corn Processing Plant Wastewater Dewatering | | |
|---|---|---|
| Test # | Example 23 (ppm product) | CST (sec) |
| 1 | 0 | 157.1 |
| 2 | 250 | 63.8 |
| 3 | 500 | 46.3 |
| 4 | 750 | 49.9 |

The data show that at a dosage of 500 ppm, CST drainage time was reduced by 70%, indicative of reasonable dewatering ability for the tannin/AETAC copolymer, Example 23.

Jar tests were conducted on a sample of wastewater from a municipal waste treatment plant that receives most of its wastewater from textile mills. This wastewater contained a high concentration of color, caused by dyes in the textile mill wastewaters. The concentration of contaminants in treated and untreated water samples was determined using a Perkin-Elmer Lambda 4B UV/VIS Spectrophotometer following the analytical procedure for color measurement recommended by the American Dye Manufacturer's Institute (ADMI). The ADMI color of the untreated wastewater was 434 ADMI units.

The tannin-based product evaluated in this example was Example 23. Aluminum sulfate was also evaluated as a control treatment representative of traditional coagulant technology.

The following procedure was used to evaluate the efficacy of the polymer and aluminum sulfate treatments:
1) 200 ml of untreated wastewater/test, samples mixed in 400 ml beakers using 1" x 2" paddles;
2) coagulant added while mixing @ 100 rpm;
3) mixed 2 min. @ 100 rpm;
4) mixed 10 min. @ 35 rpm;
5) mixing stopped, quiescent conditions maintained for 15 min. to allow solids to settle;
6) supernatant sampled and analyzed for residual color using the ADMI procedure.

Results of these tests are shown in Table X below.

**TABLE X**

| Textile Mill Wastewater Removal of Dye | | | |
|---|---|---|---|
| Test # | Chemical Treatment Additives | | Supernatant Water |
| | Al2(SO4)3-14H2O (mg/liter) | Example 23 (mg/liter) | Residual Color (ADMI color units) |
| 1 | 0 | 0 | 461 |
| 2 | 10 | 0 | 459 |
| 3 | 20 | 0 | 456 |
| 4 | 50 | 0 | 443 |
| 5 | 100 | 0 | 446 |
| 6 | 200 | 0 | 435 |
| 7 | 500 | 0 | 389 |
| 8 | 0 | 10 | 371 |
| 9 | 0 | 20 | 352 |
| 10 | 0 | 50 | 329 |
| 11 | 0 | 100 | 326 |
| 12 | 0 | 200 | 428 |
| 13 | 0 | 500 | 682 |

As shown by the residual color data, tannin-AETAC copolymer Example 23 was capable of removing approximately 25 % of the color from this wastewater. This was better than the removal achieved with aluminum sulfate.

Jar tests were conducted on a sample of wastewater from a municipal waste treatment plant that receives 80-90% of its wastewater from a textile mill. Analytical and jar test procedures were identical to those described in the previous test. Untreated, the wastewater had an ADMI color of 768. Products evaluated in this example included aluminum sulfate and Example 23. Test results are given in Table XI below.

**TABLE XI**

| Test # | Chemical Treatment Additives | | Supernatant Water |
|---|---|---|---|
| | Al2(SO4)3--14H2O (mg/liter) | Example 23 (mg/liter) | Residual Color (ADMI color units) |
| 1 | 0 | 0 | 754 |
| 2 | 10 | 0 | 773 |
| 3 | 20 | 0 | 774 |
| 4 | 50 | 0 | 752 |
| 5 | 100 | 0 | 696 |
| 6 | 200 | 0 | 620 |
| 7 | 500 | 0 | 698 |
| 8 | 0 | 10 | 721 |
| 9 | 0 | 20 | 720 |
| 10 | 0 | 50 | 565 |
| 11 | 0 | 100 | 320 |
| 12 | 0 | 200 | 240 |
| 13 | 0 | 500 | 179 |

As the residual color data in this example indicate, the tannin/AETAC copolymer achieved significant reductions in the color of this wastewater, while aluminum sulfate achieved only slight reductions in color.

Jar tests were conducted on two samples of wastewater from a textile mill that treats its own wastewater. Analytical procedures and jar test procedures were again identical to those described in the previous test. The color of the untreated wastewaters were 619 for Sample A and 626 for Sample B.

Products evaluated in this example included aluminum sulfate and tannin/AETAC copolymer, Example 23.

Results of tests with both substrates are given in Tables XII and XIII below:

**TABLE XII**

| Textile Mill Wastewater Dye Removal Sample A Results: | | | |
|---|---|---|---|
| Test # | Chemical Treatment Additives | | Supernatant Water |
| | Al2(SO4)3-14H2O (mg/liter) | Example 23 (mg/liter) | Residual Color (ADMI color units) |
| 1 | 0 | 0 | 619 |
| 2 | 10 | 0 | 607 |
| 3 | 20 | 0 | 610 |
| 4 | 50 | 0 | 607 |
| 5 | 100 | 0 | 588 |
| 6 | 200 | 0 | 556 |
| 7 | 500 | 0 | 474 |
| 8 | 0 | 10 | 579 |
| 9 | 0 | 20 | 577 |
| 10 | 0 | 50 | 523 |
| 11 | 0 | 100 | 489 |
| 12 | 0 | 200 | 332 |
| 13 | 0 | 500 | 145 |

**TABLE XIII**

| Textile Mill Wastewater Dye Removal Sample B Results: | | | |
|---|---|---|---|
| Test # | Chemical Treatment Additives | | Supernatant Water |
| | Al2(SO4)3-14H2O (mg/liter) | Example 23 (mg/liter) | Residual Color (ADMI color units) |
| 1 | 0 | 0 | 626 |
| 2 | 10 | 0 | 650 |
| 3 | 20 | 0 | 674 |
| 4 | 50 | 0 | 671 |
| 5 | 100 | 0 | 650 |
| 6 | 200 | 0 | 617 |
| 7 | 500 | 0 | 517 |
| 8 | 0 | 10 | 612 |
| 9 | 0 | 20 | 597 |
| 10 | 0 | 50 | 485 |
| 11 | 0 | 100 | 408 |
| 12 | 0 | 200 | 331 |
| 13 | 0 | 500 | 176 |

As shown by the residual color data, tannin-AETAC copolymer achieved significant color removal from both samples of wastewater from this textile mill.

While this invention has been described with respect to particular embodiment thereof, it is apparent that numerous other forms and modifications of this invention will be obvious to those skilled in the art. The appended claims and this invention generally should be construed to cover all such obvious forms and modifications which are within the true spirit and scope of the present invention.

## Claims

1. A water soluble or water dispersible polymer having the formula:
Tannin - [N-C-A]
wherein N is a nonionic monomer, C is a cationic monomer selected from methyl chloride or dimethyl sulfate quaternary salt of dimethylaminoethyl acrylate, diethylaminoethyl acrylate, dimethylaminoethyl methacrylate, diethylaminoethyl methacrylate, dimethylaminopropyl methacrylamide, dimethylaminopropyl acrylamide, and diallyl dimethyl ammonium chloride, and A is an anionic monomer, and the mole percentage of N is from 0 to 60%, the mole percentage of C is from 30 to 100% and the mole percentage of A is from 0 to 30% provided the total mole percentage in the polymer is 100%.

2. A polymer as claimed in claim 1, wherein said cationic monomer is methyl chloride quaternary salt of dimethylaminoethyl acrylate.

3. A polymer as claimed in claim 1 or 2, wherein said nonionic monomer is selected from acrylamide, methacrylamide, N-methylol-acrylamide, N,N-dimethylacrylamide; lower alkyl (C₁-C₆) ester or hydroxylated lower alkyl (C₁-C₆) ester including vinyl acetate, methyl acrylate, ethyl acrylate, methyl methacrylate, hydroxyethyl acrylate, hydroxypropyl acrylate and hydroxyethyl methacrylate; allyl glycidyl ether; and ethoxylated allyl ether of polyethylene glycol, polypropylene glycol or propoxylated acrylates,

4. A polymer claimed in any one of the preceding claims, wherein said non-ionic monomer is acrylamide or allyl glycidyl ether.

5. A polymer as claimed in any one of the preceding claims, wherein said anionic monomer is selected from acrylic acid, methacrylic acid, vinyl acetic acid, itaconic acid, maleic acid, allylacetic acid, styrene sulfonic acid, 2-acrylamido-2-methyl propane sulfonic acid, and 3-allyl-oxy-2-hydroxypropane sulfonic acid.

6. A polymer as claimed in any one of the preceding claims, wherein said anionic monomer is acrylic acid.

7. A polymer as claimed in claim 1 wherein said cationic monomer is methyl quaternary salt of dimethylaminoethyl acrylate, said nonionic monomer is allyl glycidyl ether and said anionic monomer is acrylic acid.

8. A polymer as claimed in claim 1 wherein said cationic monomer is methyl quaternary salt of dimethylaminoethyl acrylate, and said nonionic monomer is allyl glycidyl ether.

9. A polymer as claimed in claim 1 wherein said cationic monomer is methyl quaternary salt of dimethylaminoethyl acrylate and said anionic monomer is acrylic acid and said nonionic monomer is acrylamide.

10. A process for the production of a water soluble or dispersible tannin containing polymer which comprises mixing a sufficient amount of a tannin and a cationic monomer in an aqueous phase to form an aqueous solution, polymerizing said monomers at a temperature of about 20° to 100°C and a pH of about 2.0 to 8.0 in the presence of an initiator, said cationic monomer being selected from methyl chloride or dimethyl sulfate quaternary salt of dimethylaminoethyl acrylate, diethylaminoethyl acrylate, dimethylaminoethyl methacrylate, diethylaminoethyl methacrylate, dimethylaminopropyl methacrylamide, dimethylaminopropyl acrylamide, and diallyl dimethyl ammonium chloride.

11. A process as claimed in claim 10, wherein said cationic monomer is methyl chloride quaternary salt of dimethylaminoethyl acrylate.

12. A process as claimed in claim 10 or 11, wherein the polymerization temperature is 40° to 70°C.

13. A process as claimed in claim 10, 11 or 12, wherein said initiator is t-butylhydroperoxide /sodium metabisulfite.

14. A process as claimed in any one of claims 10 to 13, wherein said initiator is 2,2' azo bis (2-amidinopropane) dihydrochloride.

15. A process as claimed in any one of claims 10 to 14, wherein said aqueous solution of a tannin and a cationic monomer further comprises at least one monomer selected from the group consisting of a nonionic monomer and an anionic monomer.

16. A process as claimed in claim 15, wherein said nonionic monomer is selected from acrylamide, methacrylamide, N-methylol-acrylamide, N,N-dimethylacrylamide; lower alkyl (C₁-C₆) ester or hydroxylated lower alkyl (C₁-C₆) ester including vinyl acetate, methyl acrylate, ethyl acrylate, methyl methacrylate, hydroxyethyl acrylate, hydroxypropyl acrylate and hydroxyethyl methacrylate; allyl glycidyl ether; and ethoxylated allyl ether of polyethylene glycol, polypropylene glycol or propoxylated acrylates.

17. A process as claimed in claim 16, wherein said nonionic monomer is allyl glycidyl ether.

18. A process as claimed in claim 15, 16 or 17, wherein said anionic monomer is selected from acrylic acid, methacrylic acid, vinyl acetic acid, itaconic acid, maleic acid, allylacetic acid, styrene sulfonic acid, 2-acrylamido-2-methyl propane sulfonic acid, and 3-allyl-oxy-2-hydroxypropane sulfonic acid.

19. A process as claimed in claim 18, wherein said anionic monomer is acrylic acid.

20. A method for reducing the turbidity of an aqueous system comprising adding to said system an effective amount for the purpose of a water soluble or dispersible tannin containing polymer composition as claimed in any one of claims 1 to 9.

21. A method for reducing the color of an aqueous system comprising adding to said system a water soluble or dispersible tannin containing polymer composition as claimed in any one of claims 1 to 9.

22. A method for removing contaminants from wastewater comprising adding to said system an effective amount for the purpose of a water soluble or dispersible tannin containing polymer composition as claimed in any one of claims 1 to 9.

23. A method as claimed in claim 22 wherein said contaminant is selected from the group consisting of organic and inorganic contaminants.

24. A method as claimed in claim 22 or 23, wherein said wastewater is selected from the group consisting of oily wastewater, textile mill wastewater and corn processing wastewater.

25. A method as claimed in any one of claims 20 to 24, wherein said tannin-containing polymer is added to said water from 0.1 to about 100 parts per million water.

26. A method as claimed in any one of claims 20 to 25, wherein said tannin containing polymer is added to said water with a flocculant.

27. A method as claimed in any one of claims 20 to 26, wherein said flocculant is a copolymer of acrylamide and acrylic acid.

## Patentansprüche

1. Wasserlösliches oder in Wasser dispergierbares Polymer der Formel:
Tannin - (N - C - A)
worin N ein nichtionisches Monomer ist, C ein kationisches Monomer ist, das aus quartärem Methylchlorid- oder Dimethylsulfatsalz von Dimethylaminoethylacrylat, Diethylaminoethylacrylat, Dimethylaminoethylmethacrylat, Diethylaminoethylmethacrylat, Dimethylaminopropylmethacrylamid, Dimethylaminopropylacrylamid und Diallyldimethylammoniumchlorid ausgewählt wird und A ein anionisches Monomer ist und der prozentuale Mol-Anteil von N von 0 bis 60% ist, der prozentuale Mol-Anteil von C von 30 bis 100% ist und der prozentuale Mol-Anteil von A von 0 bis 30% ist, vorausgesetzt, daß der prozentuale Gesamtmol-Anteil in dem Polymer 100% beträgt.

2. Polymer nach Anspruch 1, worin genanntes kationisches Monomer quartäres Methylchloridsalz von Dimethylaminoethylacrylat ist.

3. Polymer nach Anspruch 1 oder 2, worin genanntes nichtionisches Monomer ausgewählt wird aus: Acrylamid, Methacrylamid, N-Methylolacrylamid, N,N-Dimethylacrylamid; niederem Alkyl-(C₁-C₆)-ester oder hydroxyliertem niederem Alkyl-(C₁-C₆)-ester, einschließlich Vinylacetat, Methylacrylat, Ethylacrylat, Methylmethacrylat, Hydroxyethylacrylat, Hydroxypropylacrylat und Hydroxyethylmethacrylat; Allylglycidylether und ethoxylierter Allylether von Polyethylenglycol, Polypropylenglycol oder propoxylierten Acrylaten.

4. Polymer nach einem der vorangehenden Ansprüche, worin genanntes nichtionisches Monomer Acrylamid oder Allylglycidylether ist.

5. Polymer nach einem der vorangehenden Ansprüche, worin genanntes anionisches Monomer ausgewählt wird aus: Acrylsäure, Methacrylsäure, Vinylessigsäure, Itaconsäure, Maleinsäure, Allylessigsäure, Styrol-Sulfonsäure, 2-Acrylamido-2-methylpropan-sulfonsäure und 3-Allyl-oxy-2-hydroxypropan-sulfonsäure.

6. Polymer nach einem der vorangehenden Ansprüche, worin genanntes anionisches Monomer Acrylsäure ist.

7. Polymer nach Anspruch 1, worin genanntes kationisches Monomer quartäres Methylsalz von Dimethylaminoethylacrylat ist, genanntes nichtionisches Monomer Allylglycidylether und genanntes anionisches Monomer Acrylsäure ist.

8. Polymer nach Anspruch 1, worin genanntes kationisches Monomer quartäres Methylsalz von Dimethylaminoethylacrylat ist und genanntes nichtionisches Monomer Allylglycidylether ist.

9. Polymer nach Anspruch 1, worin genanntes kationisches Monomer quartäres Methylsalz von Dimethylaminoethylacrylat ist und genanntes anionisches Monomer Acrylsäure ist und genanntes nichtionisches Monomer Acrylamid ist.

10. Prozeß zur Herstellung eines wasserlöslichen oder in Wasser dispergierbaren, Tannin enthaltenden Polymers, dar folgendes umfaßt: Mischen einer ausreichenden Menge eines Tannins und eines kationischen Monomers in einer wäßrigen Phase zur Bildung einer wäßrigen Lösung, Polymerisieren genannter Monomere bei einer Temperatur von circa 20°C bis 100°C und einem pH von circa 2,0 bis 8,0 in Anwesenheit eines Initiators, wobei genanntes kationisches Monomer ausgewählt wird aus: Quartärem Methylchlorid- oder Dimethylsulfatsalz von Dimethylaminoethylacrylat, Diethylaminoethylacrylat, Dimethylaminoethylmethacrylat, Diethylaminoethylmethacrylat, Dimethylaminopropylmethacrylamid, Dimethylaminopropylacrylamid und Diallyldimethylammomiumchlorid.

11. Prozeß nach Anspruch 10, worin genanntes kationisches Monomer quartäres Methylchloridsalz von Dimethylaminoethylacrylat ist.

12. Prozeß nach Anspruch 10 oder 11, worin die Polymerisationstemperatur 40°C bis 70°C beträgt.

13. Prozeß nach Anspruch 10, 11 oder 12, worin genannter Initiator t-Butylhydroperoxid/Natriummetadisulfit ist.

14. Prozeß nach einem der Ansprüche 10 bis 13, worin genannter Initiator 2,2'Azo-bis-(2-amidinopropan)dihydrochlorid ist.

15. Prozeß nach einem der Ansprüche 10 bis 14, worin genannte wäßrige Lösung eines Tannins und eines kationischen Monomers überdies mindestens ein Monomer umfaßt, das aus der Gruppe ausgewählt wird, die aus einem nichtionischen Monomer und einem anionischen Monomer besteht.

16. Prozeß nach Anspruch 15, worin genanntes nichtionisches Monomer ausgewählt wird aus: Acrylamid, Methacrylamid, N-Methylolacrylamid, N,N-dimethylacrylamid; niederem Alkyl-(C₁-C₆)-ester oder hydroxyliertem niederem Alkyl-(C₁-C₆)-ester, einschließlich Vinylacetat, Methylacrylat, Ethylacrylat, Methylmethacrylat, Hydroxyethylacrylat, Hydroxypropylacrylat und Hydroxyethylmethacrylat; Allylglycidylether und ethoxyliertem Allylether von Polyethylenglycol, Polypropylenglycol oder propoxylierten Acrylaten.

17. Prozeß nach Anspruch 16, worin genanntes nichtionisches Monomer Allylglycidylether ist.

18. Prozeß nach Ansprüchen 15, 16 oder 17, worin genanntes anionisches Monomer ausgewählt wird aus: Acrylsäure, Methacrylsäure, Vinylessigsäure, Itaconsäure, Maleinsäure, Allylessigsäure, Styrol-Sulfonsäure, 2-Acrylamido-2-methylpropan-sulfonsäure und 3-Allyl-oxy-2-hydroxypropan-sulfonsäure.

19. Prozeß nach Anspruch 18, worin genanntes anionisches Monomer Acrylsäure ist.

20. Verfahren zum Verringern der Trübung eines wäßrigen Systems, das das Zusetzen zu genanntem System einer wirksamen Menge für den Zweck einer wasserlöslichen oder in Wasser dispergierbaren, Tannin enthaltenden Polymerzusammensetzung nach einem der Ansprüche 1 bis 9 umfaßt.

21. Verfahren zum Verringern der Farbe eines wäßrigen Systems, das das Zusetzen zu genanntem System einer wasserlöslichen oder in Wasser dispergierbaren, Tannin enthaltenden Polymerzusammensetzung nach einem der Ansprüche 1 bis 9 umfaßt.

22. Verfahren zum Entfernen von Schmutzstoffen aus Abwasser, das das Zusetzen zu genanntem System einer wirksamen Menge für den Zweck einer wasserlöslichen oder in Wasser dispergierbaren, Tannin enthaltenden Polymerzusammensetzung nach einem der Ansprüche 1 bis 9 umfaßt.

23. Verfahren nach Anspruch 22, worin genannter Schmutzstoff aus der Gruppe ausgewählt wird, die aus organischen und anorganischen Schmutzstoffen besteht.

24. Verfahren nach Anspruch 22 oder 23, worin genanntes Abwasser aus der Gruppe ausgewählt wird, die aus ölhaltigem Abwasser, Textilmühlenabwasser und Maisverarbeitungsabwasser besteht.

25. Verfahren nach einem der Ansprüche 20 bis 24, worin genanntes Tannin enthaltendes Polymer genanntem Wasser von 0,1 bis circa 100 Teilen auf eine Million (ppm) Wasser zugesetzt wird.

26. Verfahren nach einem der Ansprüche 20 bis 25, worin genanntes Tannin enthaltendes Polymer genanntem Wasser mit einem Flockungsmittel zugesetzt wird.

27. Verfahren nach einem der Ansprüche 20 bis 26, worin genanntes Flockungsmittel ein Copolymer von Acrylamid und Acrylsäure ist.

## Revendications

1. Polymère soluble dans l'eau ou dispersible dans l'eau de formule :
Tannin - [N-C-A]
dans laquelle N est un monomère non ionique, C est un monomère cationique choisi parmi le sel quaternaire chlorure de méthyle ou sulfate de diméthyle de l'acrylate de diméthylaminoéthyle, de l'acrylate de diéthylaminoéthyle, du méthacrylate de diméthylaminoéthyle, du méthacrylate de diéthylaminoéthyle, du méthacrylamide de diméthylaminopropyle, de l'acrylamide de diméthylaminopropyle et du chlorure de diallyldiméthylammonium, et A est un monomère anionique, et le pourcentage molaire de N est de 0 à 60 %, le pourcentage molaire de C est de 30 à 100 % et le pourcentage molaire de A est de 0 à 30 %, sous réserve que le pourcentage molaire total dans le polymère soit de 100 %.

2. Polymère selon la revendication 1, dans lequel ledit monomère cationique est le sel quaternaire chlorure de méthyle de l'acrylate de diméthylaminoéthyle.

3. Polymère selon la revendication 1 ou 2, dans lequel ledit monomère non ionique est choisi parmi l'acrylamide, le méthacrylamide, le N-méthylolacrylamide, le N,N-diméthylacrylamide ; un ester en (C₁-C₆) d'un alkyle inférieur ou un ester en (C₁-C₆) d'un alkyle inférieur hydroxylé comprenant l'acétate de vinyle, l'acrylate de méthyle, l'acrylate d'éthyle, le méthacrylate de méthyle, l'acrylate d'hydroxyéthyle, l'acrylate d'hydroxypropyle et le méthacrylate d'hydroxyéthyle ; l'allylglycidyléther ; et l'allyléther éthoxylé du polyéthylèneglycol, du polypropylèneglycol ou des acrylates propoxylés.

4. Polymère selon l'une quelconque des revendications précédentes, dans lequel ledit monomère non ionique est l'acrylamide ou l'allylglycidyléther.

5. Polymère selon l'une quelconque des revendications précédentes, dans lequel ledit monomère anionique est choisi parmi l'acide acrylique, l'acide méthacrylique, l'acide vinylacétique, l'acide itaconique, l'acide maléique, l'acide allylacétique, l'acide styrènesulfonique, l'acide 2-acrylamido-2-méthylpropanesulfonique, et l'acide 3-allyl-oxy-2-hydroxypropanesulfonique.

6. Polymère selon l'une quelconque des revendications précédentes, dans lequel ledit monomère anionique est l'acide acrylique.

7. Polymère selon la revendication 1, dans lequel ledit monomère cationique est le sel quaternaire méthyle d'acrylate de diméthylaminoéthyle, ledit monomère non ionique est l'allylglycidyléther et ledit monomère anionique est l'acide acrylique.

8. Polymère selon la revendication 1, dans lequel ledit monomère cationique est le sel quaternaire méthyle d'acrylate de diméthylaminoéthyle et ledit monomère non ionique est l'allylglycidyléther.

9. Polymère selon la revendication 1, dans lequel ledit monomère cationique est le sel quaternaire méthyle de l'acrylate de diméthylaminoéthyle et ledit monomère anionique est l'acide acrylique et ledit monomère non ionique est l'acrylamide.

10. Procédé pour la fabrication d'un polymère contenant du tannin soluble ou dispersible dans l'eau qui comprend l'étape consistant à mélanger une quantité suffisante d'un tannin et d'un monomère cationique dans une phase aqueuse pour former une solution aqueuse, polymériser lesdits monomères à une température d'environ 20° à 100°C et un pH d'environ 2,0 à 8,0 en présence d'un amorceur, ledit monomère cationique étant choisi parmi le sel quaternaire chlorure de méthyle ou sulfate de diméthyle de l'acrylate de diméthylaminoéthyle, de l'acrylate de diéthylaminoéthyle, du méthacrylate de diméthylaminoéthyle, du méthacrylate de diéthylaminoéthyle, du méthacrylamide de diméthylaminopropyle, de l'acrylamide de diméthylaminopropyle et du chlorure de diallyldiméthylammonium.

11. Procédé selon la revendication 10, dans lequel ledit monomère cationique est le sel quaternaire chlorure de méthyle d'acrylate de diméthylaminoéthyle.

12. Procédé selon la revendication 10 ou 11, dans lequel la température de polymérisation est de 40° à 70°C.

13. Procédé selon la revendication 10, 11 ou 12, dans lequel ledit amorceur est le t-butylhydroperoxyde/métabisulfite de sodium.

14. Procédé selon l'une quelconque des revendications 10 à 13, dans lequel ledit amorceur est le dihydrochlorure de 2,2'-azo-bis(2-amidinopropane).

15. Procédé selon l'une quelconque des revendications 10 à 14, dans lequel ladite solution aqueuse d'un tannin et d'un monomère cationique comprend en outre au moins un monomère choisi dans l'ensemble constitué par un monomère non ionique et un monomère anionique.

16. Procédé selon la revendication 15, dans lequel ledit monomère non ionique est choisi parmi l'acrylamide, le méthacrylamide, le N-méthylolacrylamide, le N,N-diméthylacrylamide ; un ester en (C₁-C₆) d'un alkyle inférieur ou un ester en (C₁-C₆) d'un alkyle inférieur hydroxylé comprenant l'acétate de vinyle, l'acrylate de méthyle, l'acrylate d'éthyle, le méthacrylate de méthyle, l'acrylate d'hydroxyéthyle, l'acrylate d'hydroxypropyle et le méthacrylate d'hydroxyéthyle ; l'allylglycidyléther ; et un allyléther éthoxylé du polyéthylèneglycol, du polypropylèneglycol ou des acrylates propoxylés.

17. Procédé selon la revendication 16, dans lequel ledit monomère non ionique est l'allylglycidyléther.

18. Procédé selon la revendication 15, 16 ou 17, dans lequel ledit monomère anionique est choisi parmi l'acide acrylique, l'acide méthacrylique, l'acide vinylacétique, l'acide itaconique, l'acide maléique, l'acide allylacétique, l'acide styrènesulfonique, l'acide 2-acrylamido-2-méthylpropanesulfonique, et l'acide 3-allyl-oxy-2-hydroxypropanesulfonique.

19. Procédé selon la revendication 18, dans lequel ledit monomère anionique est l'acide acrylique.

20. Méthode pour réduire la turbidité d'un système aqueux comprenant l'étape consistant à ajouter audit système une quantité efficace à cet effet d'une composition polymère contenant un tannin soluble ou dispersible dans l'eau selon l'une quelconque des revendications 1 à 9.

21. Méthode pour réduire la couleur d'un système aqueux comprenant l'étape consistant à ajouter audit système une composition polymère contenant un tannin soluble ou dispersible dans l'eau selon l'une quelconque des revendications 1 à 9.

22. Méthode pour éliminer des contaminants dans des eaux usées comprenant l'étape consistant à ajouter audit système une quantité efficace à cet effet d'une composition polymère contenant un tannin soluble ou dispersible dans l'eau selon l'une quelconque des revendications 1 à 9.

23. Méthode selon la revendication 22, dans laquelle ledit contaminant est choisi dans l'ensemble constitué par des contaminants organiques et inorganiques.

24. Méthode selon la revendication 22 ou 23, dans laquelle lesdites eaux usées sont choisies dans l'ensemble constitué par les eaux usées huileuses, les eaux usées d'usines textiles et les eaux usées provenant du traitement du maïs.

25. Méthode selon l'une quelconque des revendications 20 à 24, dans laquelle ledit polymère contenant un tannin est ajouté aux dites eaux selon 0,1 à environ 100 parties par million d'eau.

26. Méthode selon l'une quelconque des revendications 20 à 25, dans laquelle ledit polymère contenant un tannin est ajouté aux dites eaux avec un floculant.

27. Méthode selon l'une quelconque des revendications 20 à 26, dans laquelle ledit floculant est un copolymère d'acrylamide et d'acide acrylique.
